# EUROPÄISCHE PATENTANMELDUNG

(11) **EP 1 985 561 A1**
(43) Veröffentlichungstag der Anmeldung: **29.10.2008**
(21) Anmeldenummer: 08400020.7
(22) Anmeldetag: 31.03.2008
(51) Int. Cl.: B65H 35/00, B29D 30/46, B29D 30/30

(54) **Verfahren und Vorrichtung zur Handhabung von streifenförmigen Werkstücken**

(30) Priorität: 23.04.2007 DE 102007019362
(71) Anmelder: Harburg-Freudenberger Maschinenbau GmbH, 21079 Hamburg (DE)
(72) Erfinder: Syrzisko, Frank, 21509 Glinde (DE); Wedekind, Wener, 21976 Salzhausen (DE)
(74) Vertreter: Klickow, Hans-Henning

(57) **Zusammenfassung**

Das Verfahren und die Vorrichtung dienen zur Handhabung eines streifenförmigen Werkstückes (1). Das Werkstück wird von einem Strang (2) abgetrennt und zugeschnitten sowie anschließend einem äußeren Umfang einer Verarbeitungstrommel (11) zugeführt. Das Werkstück wird vor seiner Abtrennung vom Strang einer Übergabetrommel (6) zugeführt und auf einem äußeren Umfang der Übergabetrommel fixiert. Nach seiner Fixierung im Bereich der Übergabetrommel wird das Werkstück vom Strang abgetrennt und dann von der Übergabetrommel zur Verarbeitungstrommel übergeleitet und dort fixiert. Insbesondere ist eine Zufuhr eines Seitenwandstreifens zu einer Reifenaufbautrommel unter Verwendung der Übergabetrommel möglich.

## Beschreibung

Die Erfindung betrifft ein Verfahren zur Handhabung eines streifenförmigen Werkstückes, das von einem Strang abgetrennt und zugeschnitten sowie einem äußeren Umfang einer Verarbeitungstrommel zugeführt wird.

Die Erfindung betrifft darüber hinaus eine Vorrichtung zur Handhabung eines streifenförmigen Werkstückes, die eine zuführeinrichtung für einen das Werkstück umfassenden Strang, eine Schneideinrichtung zur Konfektionierung des Werkstükkes sowie eine das zugeschnittene Werkstück an einem Außenumfang halternde Verarbeitungstrommel aufweist.

Derartige Verfahren und Vorrichtungen werden beispielsweise verwendet, um bei der Reifenherstellung Seitenwandstreifen einer Reifenaufbautrommel zuzuführen. Typischerweise wird angestrebt, die Verarbeitungstrommel mit einer möglichst kurzen Zykluszeit zu betreiben. Eine Übergabe des fertig zugeschnittenen streifenförmigen Werkstückes an die Verarbeitungstrommel soll deshalb mit möglichst kurzem Zeitbedarf durchgeführt werden. Die bislang bekannt gewordenen Verfahren und Vorrichtungen sind noch nicht in ausreichender Weise dafür geeignet, derartige Anforderungen zu erfüllen.

Aufgabe der vorliegenden Erfindung ist es daher, ein Verfahren der einleitend genannten Art derart zu verbessern, daß eine Übergabe des Werkstückes an die Verarbeitungstrommel mit geringem Zeitbedarf durchführbar ist.

Diese Aufgabe wird erfindungsgemäß dadurch gelöst, daß das Werkstück vor seiner Abtrennung vom Strang einer Übergabetrommel zugeführt und auf einem äußeren Umfang der Übergabetrommel fixiert wird, daß das Werkstück nach seiner Fixierung im Bereich der Übergabetrommel vom Strang abgetrennt und dann von der Übergabetrommel zur Verarbeitungstrommel übergeleitet und dort fixiert wird.

Weitere Aufgabe der vorliegenden Erfindung ist es, eine Vorrichtung der einleitend genannten Art derart zu konstruieren, daß eine schnelle Übergabe des Werkstückes an die Verarbeitungstrommel unterstützt wird.

Diese Aufgabe wird erfindungsgemäß dadurch gelöst, daß zwischen der Zuführeinrichtung und der Verarbeitungstrommel eine Übergabetrommel angeordnet ist, die mindestens eine Fixiereinrichtung zur Halterung des Werkstückes aufweist und die das Werkstück nach seinem Zuschneiden der Verarbeitungstrommel zuführt und mit einer Steuerung für die Fixiereinrichtung versehen ist.

Durch die Verwendung einer zwischen der Zuführeinrichtung und der Verarbeitungstrommel angeordneten Übergabetrommel ist es möglich, eine Positionierung, ein Ausrichten und ein Zuschneiden des Werkstückes im Bereich der Übergabetrommel und vor seiner Zuführung zur Verarbeitungstrommel durchzuführen. Erst nach einer vollständigen Vorbereitung des Werkstückes wird der Transfervorgang von der Übergabetrommel zur Verarbeitungstrommel durchgeführt und dieser Transfer kann mit einer hohen Transfergeschwindigkeit erfolgen, da keine weiteren Handhabungsschritte hinsichtlich des Werkstückes mehr erforderlich sind.

Eine Zuführung des Stranges zur Übergabetrommel erfolgt dadurch, daß der Strang von einer Zuführeinrichtung in Richtung auf die Übergabetrommel transportiert wird.

Zur Ermöglichung einer schrittweisen Materialabnahme bei gleichzeitiger kontinuierlicher Materialzufuhr wird vorgeschlagen, daß eine variable Länge des Stranges im Bereich der Zuführeinrichtung von einem Materialspeicher aufgenommen wird.

Zur Bereitstellung einer Kontur des Werkstückes derart, daß eine Verbindung eines Streifenanfanges mit einem Streifenende erleichtert wird, wird vorgeschlagen, daß das Werkstück mit einer schräg zu einer Werkstückoberfläche verlaufenden Schnittrichtung vom Strang abgetrennt wird.

Eine vorteilhafte Schnittrichtung wird dadurch definiert, daß das Werkstück mit einer Schnittrichtung im wesentlichen tangential zu einer Oberfläche der Übergabetrommel vom Strang abgetrennt wird.

Eine Fixierung des Werkstückes im Bereich der Übergabetrommel kann dadurch erfolgen, daß das Werkstück im Bereich der Übergabetrommel durch eine Unterdruckeinwirkung fixiert wird.

Eine Adaption an Oberflächenkonturen des Werkstückes wird dadurch unterstützt, daß im Bereich der Übergabetrommel angeordnete Saugelemente zur Unterdruckzufuhr in Richtung auf eine Oberfläche des Werkstückes federnd gelagert werden.

Eine freie Zugänglichkeit der Verarbeitungstrommel vor und nach der Durchführung eines Übergabevorganges wird dadurch unterstützt, daß die Übergabetrommel zwischen der Zuführeinrichtung und der Verarbeitungstrommel zyklisch positioniert wird.

Eine zuverlässige Fixierung des Werkstückes kann dadurch erfolgen, daß das Werkstück auf einem Außenumfang der Übergabetrommel sowohl im Bereich eines Streifenanfanges als auch im Bereich eines Streifenendes fixiert wird.

Eine Adaption an unterschiedliche Werkstücklängen kann dadurch erfolgen, daß mindestens eine Fixiereinrichtung im Bereich der Übergabetrommel entlang eines Außenumfanges der Übergabetrommel zur Anpassung an eine Länge des Werkstückes positioniert wird.

Eine vorteilhafte Abstützung des Werkstückes entlang des Außenumfanges der Übergabetrommel wird dadurch erreicht, daß entlang eines Außenumfanges der Übergabetrommel Stützsegmente zur Abstützung des Werkstückes in Abhängigkeit von einer Länge des Werkstückes positioniert werden.

Eine Fixierung des Werkstückes im Bereich der Verarbeitungstrommel wird dadurch unterstützt, daß das Werkstück bei seiner Übergabe von der Übergabetrommel zur Verarbeitungstrommel gegen einen Außenumfang der verarbeitungstrommel gedrückt wird.

Gemäß einer Verfahrensvariante ist vorgesehen, daß das Werkstück durch mindestens eine der Fixiereinrichtungen gegen die Verarbeitungstrommel gedrückt wird.

Die Einbringung ausreichend hoher Andrückkräfte wird dadurch unterstützt, daß das Werkstück von einem Andrückelement gegen die Verarbeitungstrommel gedrückt wird.

Eine einfache Handhabung wird dadurch unterstützt, daß das Andrückelement pneumatisch positioniert wird.

Kurze Gesamtverarbeitungszyklen werden dadurch unterstützt, daß eine Übergabe des Werkstückes von der Übergabetrommel an die Verarbeitungstrommel schneller als die Übergabe des Werkstückes von der Zuführeinrichtung an die Übergabetrommel durchgeführt wird.

Eine paßgenaue Zuführung des Werkstückes wird dadurch erleichtert, daß das Werkstück im Bereich der Zuführeinrichtung quer zur Transportrichtung ausgerichtet wird.

Zur gleichzeitigen verarbeitung von zwei Werkstücken wird vorgeschlagen, daß quer zur Transportrichtung jeweils zwei Zuführeinrichtungen, zwei Übergabetrommeln sowie zwei Verarbeitungstrommeln nebeneinander und gleichzeitig betrieben werden.

Eine Abstandsvorgabe der Werkstücke relativ zueinander kann dadurch erfolgen, daß die beiden Zuführeinrichtungen quer zur Transportrichtung relativ zueinander abstandsveränderlich positioniert werden.

Ebenfalls ist es möglich, daß die beiden Übergabetrommeln quer zur Transportrichtung relativ zueinander abstandsveränderlich positioniert werden.

Darüber hinaus ist auch daran gedacht, daß die beiden Verarbeitungstrommeln quer zur Transportrichtung relativ zueinander abstandsveränderlich positioniert werden.

Ein typisches Anwendungsbeispiel besteht darin, daß das Werkstück von der Übergabetrommel einer Reifenaufbautrommel zugeführt wird.

Gemäß einer bevorzugten Ausführungsform ist daran gedacht, daß der Reifenaufbautrommel ein Seitenwandstreifen eines aufzubauenden Reifens zugeführt wird.

Eine verrutschsichere Positionierung des Werkstückes wird dadurch unterstützt, daß durch eine Geschwindigkeitssteuerung der Zuführeinrichtung und der Übergabetrommel eine Längsspannung in das Werkstück eingebracht wird.

Ebenfalls trägt es zu einer Positionssicherheit des Werkstückes bei, daß durch eine Geschwindigkeitssteuerung der Verarbeitungstrommel und der Übergabetrommel eine Längsspannung in das Werkstück eingebracht wird.

Ein Anhaften des Werkstückes auf der Verarbeitungstrommel wird dadurch unterstützt, daß das Werkstück im Bereich der Verarbeitungstrommel durch eine Ausfahrbewegung des Andrückelementes in einer Längsrichtung gedehnt wird.

Eine Verschlauchung bzw. Verkabelung der Übergabetrommel wird dadurch unterstützt, daß die Übergabetrommel zyklisch mit wechselnden Drehrichtungen hin- und hergedreht wird.

In den Zeichnungen sind Ausführungsbeispiele der Erfindung schematisch dargestellt. Es zeigen:
- Fig. 1: eine schematische Seitenansicht einer Übergabetrommel, die zwischen einer Zuführeinrichtung und einer Verarbeitungstrommel angeordnet ist, in einem Betriebszustand vor einer Überleitung des das Werkstück umfassenden Stranges zur Übergabetrommel,
- Fig. 2: eine teilweise Darstellung der Anordnung gemäß Fig. 1 nach einer teilweisen Durchführung einer Fixierung des zugeführten Stranges am Außenumfang der Übergabetrommel,
- Fig. 3: die Anordnung gemäß Fig. 2 nach einer vollständigen vorgesehenen Zuführung einer vorgegebenen Länge des Stranges zur Übergabetrommel,
- Fig. 4: die Anordnung gemäß Fig. 3 nach einem Abtrennen des auf der Übergabetrommel fixierten Werkstückes vom restlichen Strang und einer teilweisen Durchführung einer Transferbewegung der Übergabetrommel von der Zuführeinrichtung zur verarbeitungstrommel,
- Fig. 5: die Anordnung gemäß Fig. 4 kurz vor einer Beendigung der Transferbewegung der Übergabetrommel,
- Fig. 6: eine teilweise Darstellung der Anordnung gemäß Fig. 5 nach einem Beginn eines Transfers des Werkstückes von der Übergabetrommel zur Verarbeitungstrommel,
- Fig. 7: die Anordnung gemäß Fig. 6 nach einem vollständigen Transfer des Werkstückes zur Verarbeitungstrommel,
- Fig. 8: eine stark vergrößerte teilweise Darstellung der Verarbeitungstrommel, der Übergabetrommel, des Werkstückes und eines Andruckelementes zu einem Beginn eines Andrückvorganges und
- Fig. 9: die Anordnung gemäß Fig. 8 nach einer Fortsetzung des Andrückvorganges.

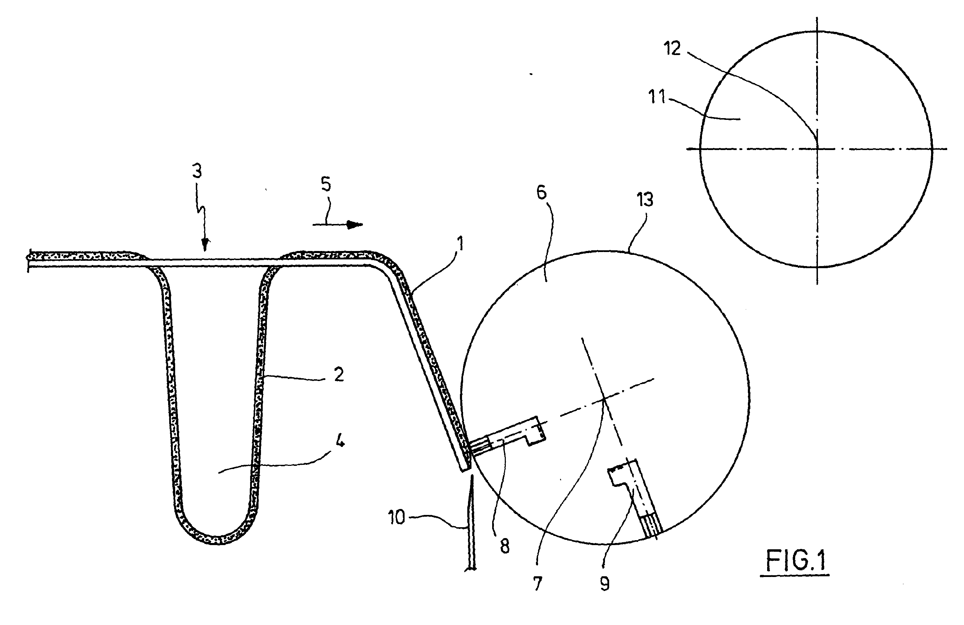

Fig. 1 zeigt eine Seitenansicht der Vorrichtung zur Handhabung des streifenförmigen Werkstückes (1), das im Betriebszustand gemäß Fig. 1 noch als Teil eines Stranges (2) ausgebildet ist. Der Strang (2) verläuft im Bereich einer Zuführeinrichtung (3). Zur Unterstützung einer kontinuierlichen Zufuhr des Stranges (2), beispielsweise als Ausgangsprodukt einer Extrusionseinrichtung, weist die Zuführeinrichtung (3) einen Materialspeicher (4) auf, der beispielsweise als ein schlaufenartiger Durchhang des Stranges (2) realisiert ist.

In einer Transportrichtung (5) hinter der Zuführeinrichtung (3) ist eine Übergabetrommel (6) angeordnet, die relativ zu einer Trommelachse (7) drehbeweglich gelagert ist. Beim dargestellten Ausführungsbeispiel weist die Übergabetrommel (6) zwei Fixiereinrichtungen (8, 9) für das Werkstück (1) auf. Für einen Zuschnitt des Werkstückes (1) ist in einem Übergangsbereich von der Zuführeinrichtung (3) zur Übergabetrommel (6) eine Schneideinrichtung (10) angeordnet.

Zu erkennen ist in Fig. 1 des weiteren eine verarbeitungstrommel (11), die relativ zu einer Trommelachse (12) drehbeweglich gelagert ist.

Bei dem in Fig. 1 gezeigten Betriebszustand ist das Werkstück (1) mit seinem der Zuführeinrichtung (3) abgewandten Ende bereits im Bereich eines Außenumfanges (13) der Übergabetrommel (6) positioniert und wird hier von der Fixiereinrichtung (8) gehaltert. Die Fixiereinrichtung (8) kann beispielsweise aus einem oder mehreren Saugelementen bestehen, die mit Unterdruck beaufschlagt sind. Insbesondere ist daran gedacht, eine Mehrzahl von Saugelementen reihenartig nebeneinander und quer zu einer Längsachse des Werkstückes (1) anzuordnen. Hierdurch kann eine Fixierung des Werkstükkes (1) über dessen Gesamtbreite erfolgen. Gemäß einer bevorzugten Ausführungsform sind die Saugelemente quer zur Oberfläche des Werkstückes (1) federnd gelagert. Hierdurch ist es möglich, daß sich die Position der Saugelemente automatisch einer Oberflächenkontur des Werkstückes (1) anpaßt und auch bei unterschiedlichen Oberflächenprofilen des Werkstückes (1) eine zuverlässige Fixierung gewährleistet ist.

Gemäß einem weiteren Ausführungsbeispiel ist daran gedacht, die reihenartig angeordneten Saugelemente im Bereich eines Trägers zu haltern, der pneumatisch positionierbar ist. Hierdurch ist es möglich, die Fixiereinrichtung (8) aktiv in Richtung auf das Werkstück (1) zu verfahren bzw. vom Werkstück (1) zu entfernen. Übergabevorgänge werden hierdurch erleichtert.

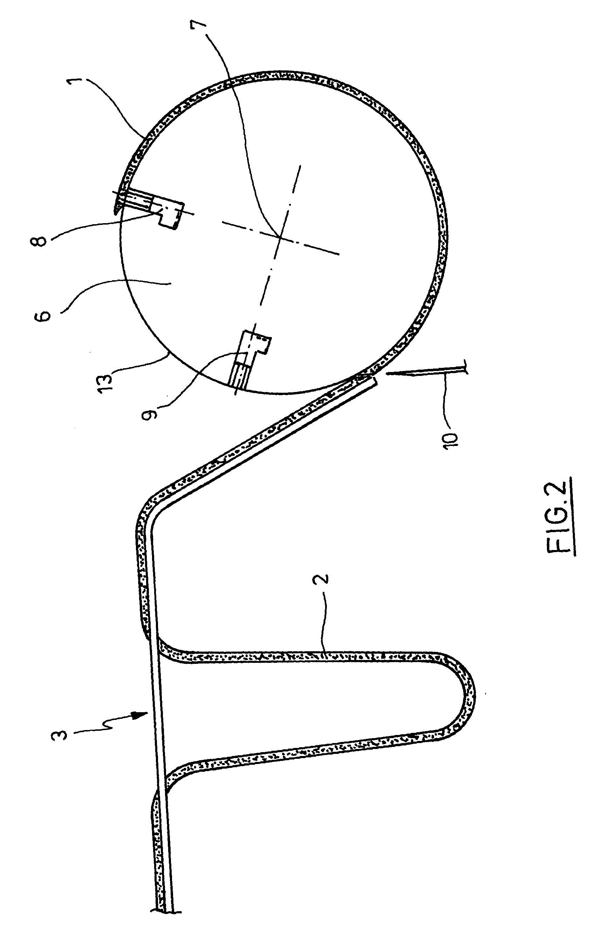

Gemäß dem Betriebszustand in Fig. 2 ist bereits eine Drehbewegung der Übergabetrommel (6) um die Trommelachse (7) erfolgt und ein Teil des noch mit dem Strang (2) verbundenen Werkstückes (1) ist im Bereich des Außenumfanges (13) der Übergabetrommel (6) fixiert. Durch eine geeignete Abstimmung einer Drehzahl der Übergabetrommel (6) und einer Zuführgeschwindigkeit des Stranges (2) im Bereich der Zuführeinrichtung (3) ist es möglich, beispielsweise eine Zugkraft in den Strang (2) einzuleiten und das Werkstück (1) in einem in Längsrichtung gespannten Zustand im Bereich des Außenumfanges (6) zu fixieren.

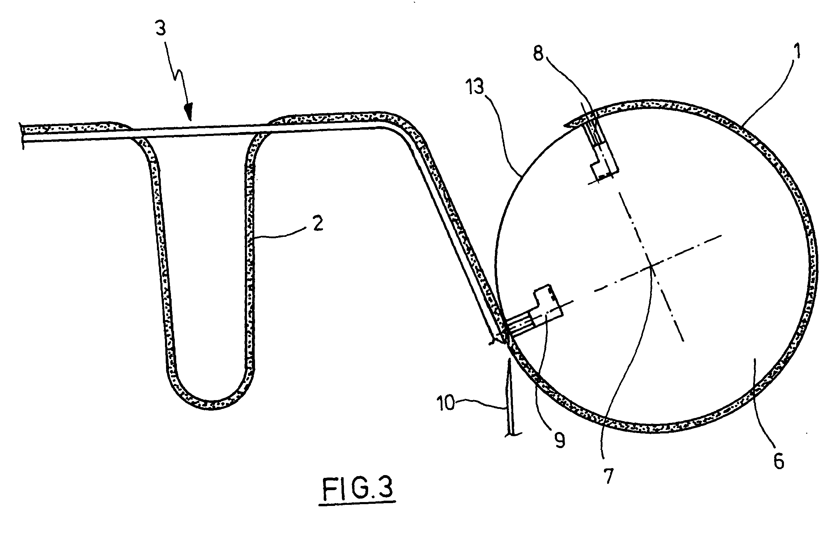

Gemäß dem in Fig. 3 dargestellten Betriebszustand ist das Werkstück (1) vollständig der Übergabetrommel (6) zugeführt und unter Verwendung der Schneideinrichtung (10) vom Strang (2) abgetrennt. Die Schneideinrichtung (10) ist mit einer tangentialen Komponente relativ zum Außenumfang (13) angeordnet, so daß zum einen eine schräge Schnittfläche im Anfangs- und Endbereich des Werkstückes (1) erzeugt wird und darüber hinaus Vertiefungen oder Nuten im Bereich des Au-βenumfanges (13) entbehrlich sind.

Die zweite Fixiereinrichtung (9) ist derart positioniert, daß das Ende des Werkstückes (1) von der zweiten Fixiereinrichtung (9) beaufschlagt ist. Mindestens eine der Fixiereinrichtungen (8, 9) ist in einer Umfangsrichtung der Übergabetrommel (6) derart positionierbar, daß eine Anpassung an unterschiedliche vorgegebene Längen des Werkstückes (1) möglich ist.

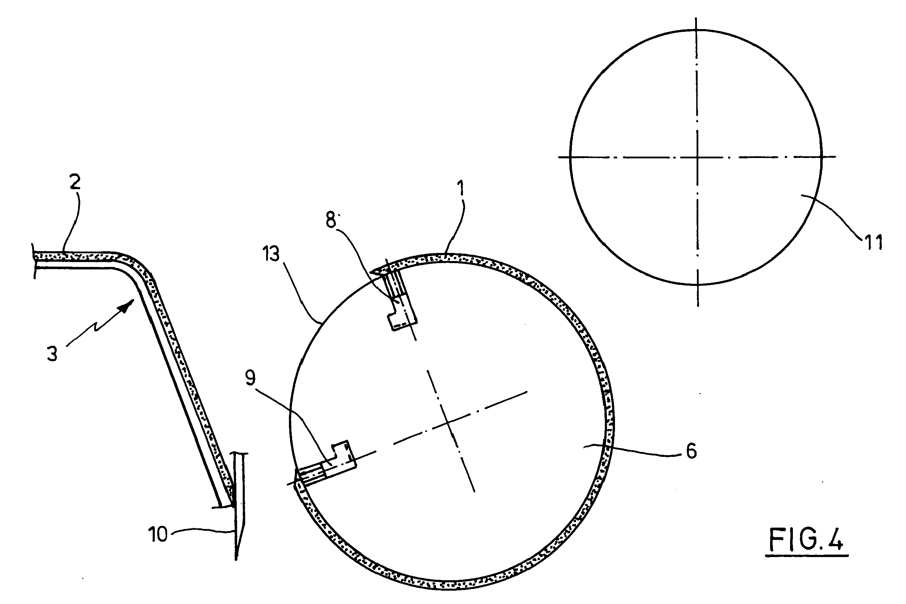

Gemäß den Betriebszustand in Fig. 4 ist die Übergabetrommel (6) zwischen der Zuführeinrichtung (3) und der Verarbeitungstrommel (11) positionierbar. Dies ermöglicht eine freie zugänglichkeit der Verarbeitungstrommel (11) ohne Behinderungen durch die Übergabetrommel (6). Gemäß dem Betriebszustand in Fig. 4 befindet sich die Übergabetrommel (6) in einem mittleren Bereich des Transferweges von der Zuführeinrichtung (3) zur Verarbeitungstrommel (11). Das Werkstück (1) ist bei der Durchführung der Transferbewegung durch die Fixiereinrichtungen (8, 9) im Bereich des Außenumfanges (13) der Übergabetrommel (6) gehalten.

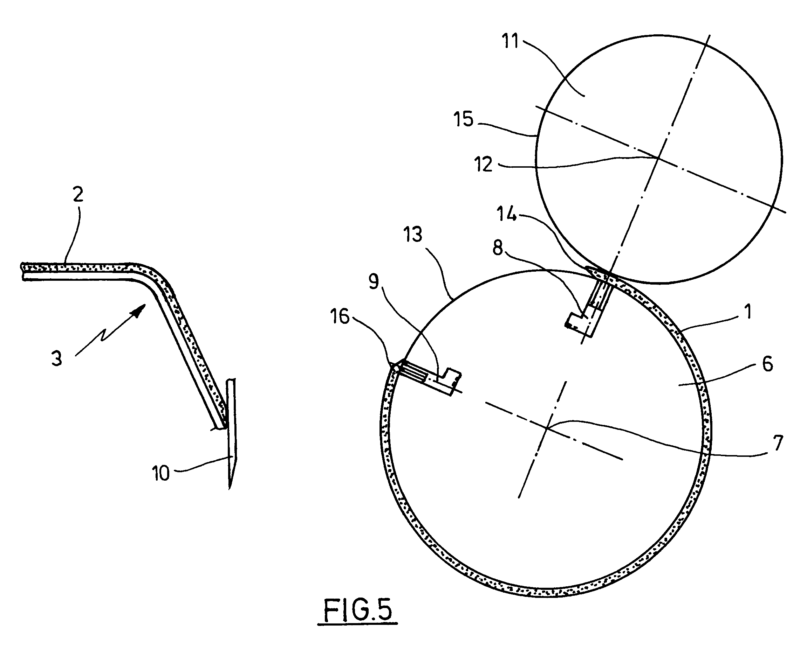

Fig. 5 zeigt einen Betriebszustand, bei dem die Übergabetrommel (6) die Transferbewegung von der Zuführeinrichtung (3) zur Verarbeitungstrommel (12) nahezu abgeschlossen hat. Ein Streifenanfang (14) des Werkstückes (1) berührt bereits fast einen Außenumfang (15) der Verarbeitungstrommel (11). Ein Streifenende (16) des Werkstückes (1) wird weiterhin von der Fixiereinrichtung (9) gehaltert.

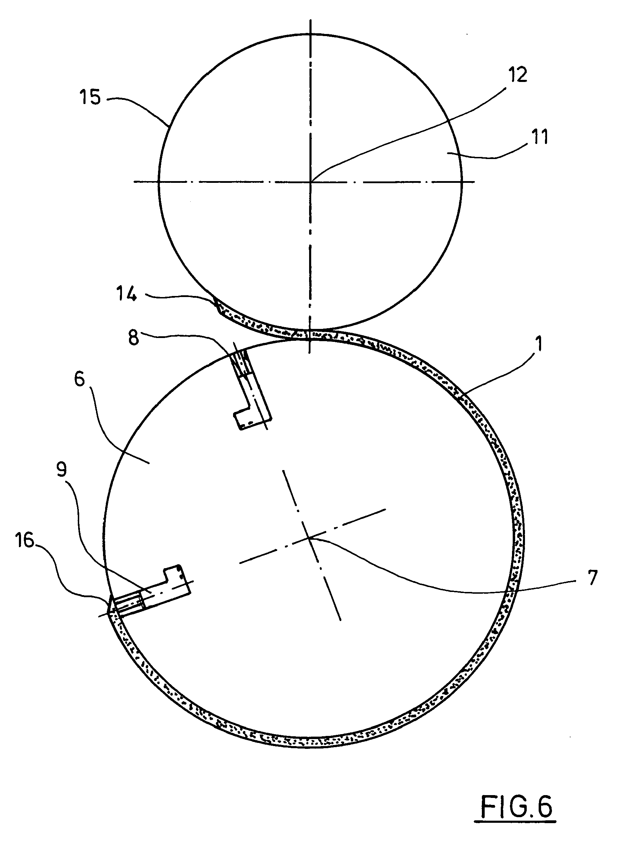

Fig. 6 veranschaulicht einen Betriebszustand, bei dem ein erster Teil des Werkstückes (1) bereits an die verarbeitungstrommel (11) übergeben wurde und im Bereich des Außenumfanges (15) fixiert ist. Bei einem elastomeren Werkstück (1) ist es möglich, daß das Werkstück (1) aufgrund seiner Materialkonsistenz auf dem Außenumfang (15) haftet.

Zur Durchführung des Übergabevorganges führen die Übergabetrommel (16) und die Verarbeitungstrommel (11) jeweils Drehbewegungen um ihre Trommelachsen (7, 12) durch. Auch bei diesem Übergabevorgang ist es möglich, durch eine Abstimmung der jeweiligen Drehzahlen gegebenenfalls eine Zugspannung oder eine Stauchung in das Werkstück (1) einzubringen.

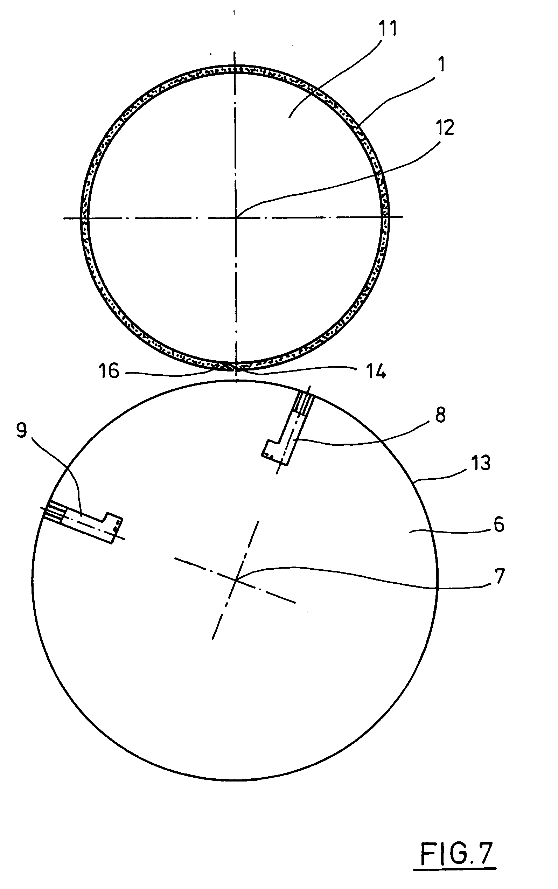

Gemäß dem in Fig. 7 dargestellten Betriebszustand ist das Werkstück (1) vollständig an die Verarbeitungstrommel (11) übergeben. Der Streifenanfang (14) und das Streifenende (16) überlappen sich im Bereich ihrer schrägen Schnittkanten. Die Übergabetrommel (6) hat sich bereits wieder geringfügig von der Verarbeitungstrommel (11) entfernt und führt eine Rückdrehung um ihre Trommelachse (7) durch. Ein Hin- und Herdrehen vereinfacht gegenüber einem Weiterdrehen mit konstanter Drehrichtung eine Zuführung von Schläuchen und Kabeln zur Übergabetrommel (6).

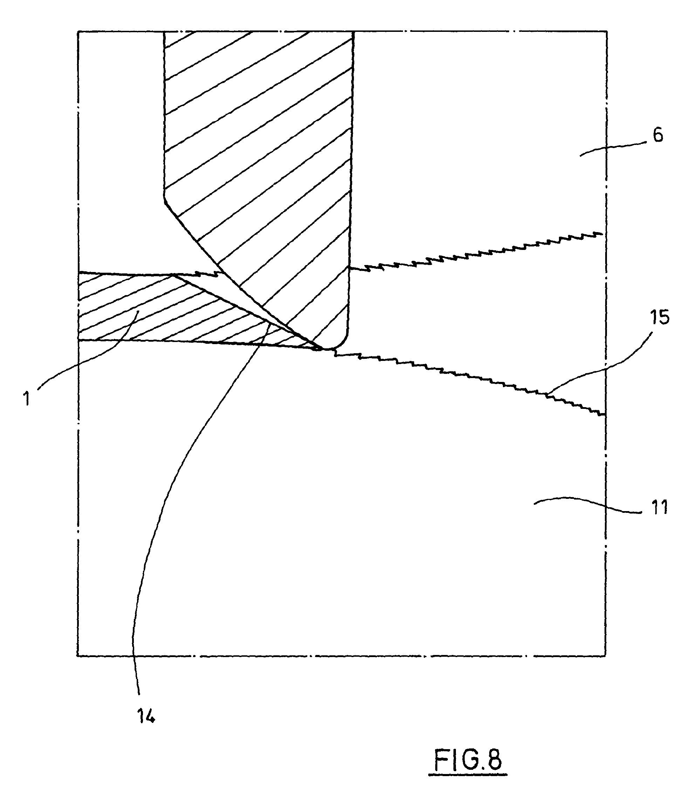

Fig. 8 veranschaulicht in einer stark vergrößerten Darstellung den Beginn des Übergabevorganges des Werkstückes (1) von der Übergabetrommel (6) zur Verarbeitungstrommel (11). Zur Fixierung des Streifenanfangs (14) auf dem Außenumfang (15) der Verarbeitungstrommel (11) ist ein Andrückelement (17) verwendet, das in einer radialen Richtung der Übergabetrommel (6) oder zumindest mit einer entsprechenden radialen Komponente positionierbar ist. Beispielsweise ist es möglich, eine pneumatische Positionierung des Andrückelementes (17) vorzusehen. Das Andrückelement (17) drückt gemäß dem Betriebszustand in Fig. 8 den Streifenanfang (14) gegen den Außenumfang (15).

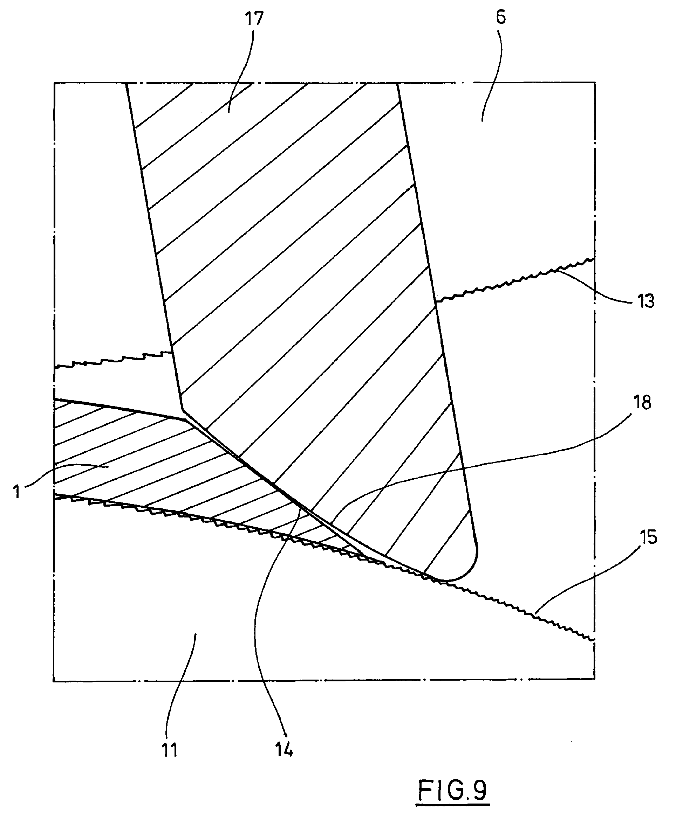

Gemäß dem Betriebszustand in Fig. 9 haben die Trommeln (6, 11) zur Weiterführung des Übergabevorganges des Werkstückes (1) im vergleich zu Fig. 8 ihre jeweiligen Drehbewegungen fortgesetzt. Das Andrückelement (17) wurde hierbei weiter in einer radialen Richtung bzw. mit einer radialen Komponente relativ zur Übergabetrommel (6) ausgefahren. Es ist zu erkennen, daß das Andrückelement (17) im Bereich seiner dem Streifenanfang (14) zugewandten Ausdehnung mit einer Andrückkontur (18) versehen ist, die an den schrägen Verlauf der Schnittkante im Bereich des Streifenanfanges (10) angepaßt ist. Ebenfalls ist zu erkennen, daß das der Übergabetrommel (6) abgewandte Ende des Andrückelementes (17) durch den Ausfahrvorgang seinen Abstand zur in Fig. 9 nicht erkennbaren Trommelachse (7) vergrößert. In einer Umfangsrichtung der Übergabetrommel (6) vergrößert hierdurch das dem Werkstück (1) zugewandte Ende des Andrückelementes (17) seine Umfangsgeschwindigkeit relativ zur Trommelachse (7). Diese Vergrößerung der Umfangsgeschwindigkeit führt zur Einbringung einer Längskraft in das Werkstück (1) und generiert hierdurch eine Zugspannung innerhalb des Werkstückes (1), die eine Fixierung des Werkstückes (1) im Bereich des Außenumfanges (15) der Verarbeitungstrommel (11) unterstützt.

Die Durchführung des Schneidvorganges zwischen der Zuführeinrichtung (3) und der Übergabetrommel (6) unabhängig von einer Übergabe des Werkstückes (1) an die verarbeitungstrommel (11) ermöglicht es, den Schneidvorgang quasi offline durchzuführen. Insbesondere kann der Schneidvorgang langsam und damit hochwertig erfolgen.

Bei einer Aufbringung des werkstückes (1) auf die Übergabetrommel (6) mit einer Längsdehnung des Werkstückes (1) ist es insbesondere möglich, eine Querverformung des Werkstükkes (1) durch Spannungen innerhalb des Werkstückes (1) zu verhindern. Typischerweise weist das Werkstück (1) bei einer Ausbildung als Seitenwandstreifen für einen Reifen Spannungen quer zu seiner Längsrichtung auf, die ohne externe Kraftbeaufschlagung zu einer bogenartigen Querverformung des Werkstückes (1) führen würden. Nach einer vorherigen Linearisierung und einer Aufbringung auf die Übergabetrommel (7) unter Zugbeanspruchung verhindern die resultierenden Spannkräfte eine entsprechende Rückverformung des Werkstückes (1) bei der Durchführung der Übergabevorgänge bzw. bei der Durchführung der Transferbewegungen.

## Patentansprüche

1. Verfahren zur Handhabung eines streifenförmigen Werkstückes, das von einem Strang abgetrennt und zugeschnitten sowie einem äußeren Umfang einer Verarbeitungstrommel zugeführt wird, **dadurch gekennzeichnet, daß** das Werkstück (1) vor seiner Abtrennung vom Strang (2) einer Übergabetrommel (6) zugeführt wird und auf einem äußeren Umfang (13) der Übergabetrommel (6) fixiert wird, daß das Werkstück (1) nach seiner Fixierung im Bereich der Übergabetrommel (6) vom Strang (2) abgetrennt und dann von der Übergabetrommel (6) zur Verarbeitungstrommel (11) übergeleitet und dort fixiert wird.

2. Verfahren nach Anspruch 1, **dadurch gekennzeichnet, daß** der Strang (2) von einer Zuführeinrichtung (3) in Richtung auf die Übergabetrommel (6) transportiert wird.

3. Verfahren nach Anspruch 1 oder 2, **dadurch gekennzeichnet, daß** eine variable Länge des Stranges (2) im Bereich der Zuführeinrichtung (3) von einem Materialspeicher (4) aufgenommen wird.

4. verfahren nach einem der Ansprüche 1 bis 3, **dadurch gekennzeichnet, daß** das Werkstück (1) mit einer schräg zu einer Werkstückoberfläche verlaufenden Schnittrichtung vom Strang (2) abgetrennt wird.

5. Verfahren nach einem der Ansprüche 1 bis 4, **dadurch gekennzeichnet, daß** das Werkstück (1) mit einer Schnittrichtung im wesentlichen tangential zu einer Oberfläche der Übergabetrommel (6) vom Strang (2) abgetrennt wird.

6. verfahren nach einem der Ansprüche 1 bis 5, **dadurch gekennzeichnet, daß** das Werkstück (1) im Bereich der Übergabetrommel (6) durch eine Unterdruckeinwirkung fixiert wird.

7. Verfahren nach einem der Ansprüche 1 bis 6, **dadurch gekennzeichnet, daß** im Bereich der Übergabetrommel (6) angeordnete Saugelemente zur Unterdruckzufuhr in Richtung auf eine Oberfläche des Werkstückes (1) federnd gelagert werden.

8. Verfahren nach einem der Ansprüche 1 bis 7, **dadurch gekennzeichnet, daß** die Übergabetrommel (6) zwischen der Zuführeinrichtung (3) und der Verarbeitungstrommel (11) zyklisch positioniert wird.

9. Verfahren nach einem der Ansprüche 1 bis 8, **dadurch gekennzeichnet, daß** das Werkstück (1) auf einem Außenumfang (13) der Übergabetrommel (6) sowohl im Bereich eines Streifenanfanges (14) als auch im Bereich eines Streifenendes (16) fixiert wird.

10. Verfahren nach einem der Ansprüche 1 bis 9, **dadurch gekennzeichnet, daß** mindestens eine Fixiereinrichtung (8, 9) im Bereich der Übergabetrommel (6) entlang eines Außenumfanges der Übergabetrommel (6) zur Anpassung an eine Länge des Werkstückes (1) positioniert wird.

11. Verfahren nach einem der Ansprüche 1 bis 10, **dadurch gekennzeichnet, daß** entlang eines Außenumfanges der Übergabetrommel (6) Stützsegmente zur Abstützung des Werkstückes (1) in Abhängigkeit von einer Länge des Werkstückes (1) positioniert werden.

12. Verfahren nach einem der Ansprüche 1 bis 11, **dadurch gekennzeichnet, daß** das Werkstück bei seiner Übergabe von der Übergabetrommel (6) zur Verarbeitungstrommel (11) gegen einen Außenumfang (15) der verarbeitungstrommel (11) gedrückt wird.

13. Verfahren nach Anspruch 12, **dadurch gekennzeichnet, daß** das Werkstück (1) durch mindestens eine der Fixiereinrichtungen (8, 9) gegen die Verarbeitungstrommel (11) gedrückt wird.

14. Verfahren nach Anspruch 12, **dadurch gekennzeichnet, daß** das Werkstück (1) von einem Andrückelement (17) gegen die Verarbeitungstrommel (11) gedrückt wird.

15. Verfahren nach Anspruch 14, **dadurch gekennzeichnet, daß** das Andrückelement (17) pneumatisch positioniert wird.

16. Verfahren nach einem der Ansprüche 1 bis 15, **dadurch gekennzeichnet, daß** eine Übergabe des Werkstückes (1) von der Übergabetrommel (6) an die Verarbeitungstrommel (11) schneller als die Übergabe des Werkstückes (1) von der Zuführeinrichtung (3) an die Übergabetrommel (6) durchgeführt wird.

17. Verfahren nach einem der Ansprüche 1 bis 16, **dadurch gekennzeichnet, daß** das Werkstück (1) im Bereich der Zuführeinrichtung (3) quer zur Transportrichtung (5) ausgerichtet wird.

18. Verfahren nach einem der Ansprüche 1 bis 17, **dadurch gekennzeichnet, daß** quer zur Transportrichtung (5) jeweils zwei Zuführeinrichtungen (3), zwei Übergabetrommeln (6) sowie zwei Verarbeitungstrommeln (11) nebeneinander und gleichzeitig betrieben werden.

19. Verfahren nach einem der Ansprüche 1 bis 18, **dadurch gekennzeichnet, daß** die beiden Zuführeinrichtungen (3) quer zur Transportrichtung (5) relativ zueinander abstandsveränderlich positioniert werden.

20. Verfahren nach einem der Ansprüche 1 bis 18, **dadurch gekennzeichnet, daß** die beiden Übergabetrommeln (6) quer zur Transportrichtung (5) relativ zueinander abstandsveränderlich positioniert werden.

21. Verfahren nach einem der Ansprüche 1 bis 18, **dadurch gekennzeichnet, daß** die beiden Verarbeitungstrommeln (11) quer zur Transportrichtung (5) relativ zueinander abstandsveränderlich positioniert werden.

22. Verfahren nach einem der Ansprüche 1 bis 21, **dadurch gekennzeichnet, daß** das Werkstück (1) von der Übergabetrommel (6) einer Reifenaufbautrommel zugeführt wird.

23. Verfahren nach Anspruch 22, **dadurch gekennzeichnet, daß** der Reifenaufbautrommel ein Seitenwandstreifen eines aufzubauenden Reifens zugeführt wird.

24. Verfahren nach einem der Ansprüche 1 bis 23, **dadurch gekennzeichnet, daß** durch eine Geschwindigkeitssteuerung der Zuführeinrichtung (3) und der Übergabetrommel (6) eine Längsspannung in das Werkstück (1) eingebracht wird.

25. Verfahren nach einem der Ansprüche 1 bis 23, **dadurch gekennzeichnet, daß** durch eine Geschwindigkeitssteuerung der Verarbeitungstrommel (11) und der Übergabetrommel (6) eine Längsspannung in das Werkstück (1) eingebracht wird.

26. Verfahren nach einem der Ansprüche 1 bis 25, **dadurch gekennzeichnet, daß** das Werkstück (1) im Bereich der Verarbeitungstrommel (11) durch eine Ausfahrbewegung des Andrückelementes (17) in einer Längsrichtung gedehnt wird.

27. Verfahren nach einem der Ansprüche 1 bis 26, **dadurch gekennzeichnet, daß** die Übergabetrommel (6) zyklisch mit wechselnden Drehrichtungen hin- und hergedreht wird.

28. Verfahren zur Herstellung eines Reifens, der einen Profilstreifen sowie zwei Seitenwandstreifen aufweist, die im Bereich einer Reifenaufbautrommel miteinander verbunden werden, **dadurch gekennzeichnet, daß** mindestens einer der Seitenwandstreifen der Reifenaufbautrommel gemäß mindestens einem der Ansprüche 1 bis 27 zugeführt wird.

29. Vorrichtung zur Handhabung eines streifenförmigen Werkstückes, die eine Zuführeinrichtung für einen das Werkstück umfassenden Strang, eine Schneideinrichtung zur Konfektionierung des Werkstückes sowie eine das zugeschnittene Werkstück an einem Außenumfang halternde Verarbeitungstrommel aufweist, **dadurch gekennzeichnet, daß** zwischen der Zuführeinrichtung (3) und der Verarbeitungstrommel (11) eine Übergabetrommel (6) angeordnet ist, die mindestens eine Fixiereinrichtung (8, 9) zur Halterung des Werkstückes (1) aufweist und die das Werkstück (1) nach seinem Zuschneiden der Verarbeitungstrommel (11) zuführt und die mit einer Steuerung für die Fixiereinrichtung (8, 9) versehen ist.

30. Vorrichtung nach Anspruch 29, **dadurch gekennzeichnet, daß** in einer Transportrichtung des Stranges (2) vor der Übergabetrommel (6) eine Zuführeinrichtung (3) für den Strang (2) angeordnet ist.

31. Vorrichtung nach Anspruch 29 oder 30, **dadurch gekennzeichnet, daß** im Bereich der Zuführeinrichtung (3) ein Materialspeicher (4) zur Aufnahme einer variablen Länge des Stranges (2) angeordnet ist.

32. Vorrichtung nach einem der Ansprüche 29 bis 31, **dadurch gekennzeichnet, daß** eine Schneideinrichtung (10) mit einer Schnittrichtung schräg zu einer Längsrichtung des Stranges (2) angeordnet ist.

33. Vorrichtung nach einem der Ansprüche 29 bis 32, **dadurch gekennzeichnet, daß** die Schneideinrichtung (10) mit einer Schnittrichtung im wesentlichen tangential zu einer Oberfläche der Übergabetrommel (6) angeordnet ist.

34. Vorrichtung nach einem der Ansprüche 29 bis 33, **dadurch gekennzeichnet, daß** im Bereich der Übergabetrommel (6) mindestens eine Saugeinrichtung zur Fixierung des Werkstückes (1) angeordnet ist.

35. Vorrichtung nach einem der Ansprüche 29 bis 34, **dadurch gekennzeichnet, daß** im Bereich der Übergabetrommel (6) angeordnete Saugelemente federnd gelagert sind.

36. Vorrichtung nach einem der Ansprüche 29 bis 35, **dadurch gekennzeichnet, daß** die Übergabetrommel (6) einen Antrieb zur zyklischen Positionierung zwischen der Zuführeinrichtung (6) und der Verarbeitungstrommel (11) aufweist.

37. Vorrichtung nach einem der Ansprüche 29 bis 36, **dadurch gekennzeichnet, daß** die Übergabetrommel (6) eine Fixiereinrichtung zur Halterung des Werkstückes (1) im Bereich eines Außenumfanges (13) sowohl im Bereich eines Streifenanfanges (14) als auch im Bereich eines Streifenendes (16) aufweist.

38. Vorrichtung nach einem der Ansprüche 29 bis 37, **dadurch gekennzeichnet, daß** im Bereich der Übergabetrommel (6) entlang eines Außenumfanges mindestens eine Fixiereinrichtung (8, 9) positioniert ist.

39. Vorrichtung nach einem der Ansprüche 29 bis 38, **dadurch gekennzeichnet, daß** im Bereich eines Außenumfanges der Übergabetrommel (6) mindestens ein Stützsegment zur Abstützung des Werkstückes in Abhängigkeit von einer Länge des Werkstückes (1) angeordnet ist.

40. Vorrichtung nach einem der Ansprüche 29 bis 39, **dadurch gekennzeichnet, daß** eine Andrückeinrichtung zum Pressen des Werkstückes bei seiner Übergabe von der Übergabetrommel (6) zur Verarbeitungstrommel (11) gegen einen Außenumfang (15) der Verarbeitungstrommel vorgesehen ist.

41. Vorrichtung nach Anspruch 40, **dadurch gekennzeichnet, daß** mindestens eine der Fixiereinrichtungen (8, 9) als Andrückeinrichtung ausgebildet ist.

42. Vorrichtung nach Anspruch 40, **dadurch gekennzeichnet, daß** ein separates Andrückelement (17) verwendet ist.

43. Vorrichtung nach Anspruch 42, **dadurch gekennzeichnet, daß** das Andrückelement (17) pneumatisch angetrieben ist.

44. Vorrichtung nach einem der Ansprüche 29 bis 43, **dadurch gekennzeichnet, daß** die Übergabetrommel (6) mit einer Rotationssteuerung versehen ist, die bei einer Übergabe des Werkstückes (1) von der Übergabetrommel (6) an die Verarbeitungstrommel (11) eine höhere Drehzahl als bei der Übergabe des Werkstückes (1) in der Zuführeinrichtung (3) an die Übergabetrommel (6) vorgibt.

45. Vorrichtung nach einem der Ansprüche 29 bis 44, **dadurch gekennzeichnet, daß** das Werkstück (1) im Bereich mindestens einer Kante von einem im Bereich der Zuführeinrichtung (3) angeordneten Ausrichtelement beaufschlagt ist.

46. Vorrichtung nach einem der Ansprüche 29 bis 45, **dadurch gekennzeichnet, daß** quer zur Transportrichtung (5) jeweils zwei Zuführeinrichtungen (3), zwei Übergabetrommeln (6) sowie zwei Verarbeitungstrommeln (11) angeordnet sind.

47. Vorrichtung nach einem der Ansprüche 29 bis 46, **dadurch gekennzeichnet, daß** die beiden Zuführeinrichtungen (3) quer zur Transporteinrichtung (5) relativ zueinander abstandsveränderlich angeordnet sind.

48. Vorrichtung nach einem der Ansprüche 29 bis 42, **dadurch gekennzeichnet, daß** die beiden Übergabetrommeln (6) quer zur Transportrichtung (5) relativ zueinander abstandsveränderlich angeordnet sind.

49. Vorrichtung nach einem der Ansprüche 29 bis 48, **dadurch gekennzeichnet, daß** die beiden verarbeitungstrommeln (11) quer zur Transportrichtung (5) relativ zueinander abstandsveränderlich angeordnet sind.

50. Vorrichtung nach einem der Ansprüche 29 bis 49, **dadurch gekennzeichnet, daß** die Übergabetrommel (6) als Zuführeinrichtung einer Reifenaufbautrommel ausgebildet ist.

51. Vorrichtung nach einem der Ansprüche 29 bis 50, **dadurch gekennzeichnet, daß** die Übergabetrommel (6) zur Übergabe eines Seitenwandstreifens eines aufzubauenden Reifens ausgebildet ist.

52. Vorrichtung nach einem der Ansprüche 29 bis 51, **dadurch gekennzeichnet, daß** die Zuführeinrichtung (3) und die Übergabetrommel (6) mit einer Geschwindigkeitssteuerung zur Vorgabe eines Längsspannung innerhalb des Werkstückes (1) gekoppelt sind.

53. Vorrichtung nach einem der Ansprüche 29 bis 52, **dadurch gekennzeichnet, daß** die Verarbeitungstrommel (11) und die Übergabetrommel (6) zur Vorgabe einer Längsspannung innerhalb des Werkstückes (1) mit einer Geschwindigkeitssteuerung gekoppelt sind.

54. Vorrichtung nach einem der Ansprüche 29 bis 48, **dadurch gekennzeichnet, daß** das Andrückelement (17) im Bereich der Verarbeitungstrommel (11) angeordnet und in einer im wesentlichen radialen Richtung relativ zu einer Längsachse der Verarbeitungstrommel (11) positionierbar angeordnet ist.

55. Vorrichtung nach einem der Ansprüche 29 bis 49, **dadurch gekennzeichnet, daß** die Übergabetrommel (6) einen Antrieb zur zyklischen Durchführung von wechselnden Drehrichtungen aufweist.
